# EUROPÄISCHE PATENTANMELDUNG

(11) **EP 2 724 848 A1**
(43) Veröffentlichungstag der Anmeldung: **30.04.2014**
(21) Anmeldenummer: 13188817.4
(22) Anmeldetag: 16.10.2013
(51) Int. Cl.: B29C 70/54, B29B 11/16, B29C 70/20, B29C 70/22, B29C 65/62

(54) **Verfahren zum Herstellen einer Anordnung aus miteinander verbundenen Materialstücken aus einem flächig ausgebildeten, unidirektional-faserverstärkten Material und System zum Verbinden der Materialstücke einer derartigen Anordnung**

(30) Priorität: 24.10.2012 DE 102012110122
(71) Anmelder: REHAU AG + Co, 95111 Rehau (DE)
(72) Erfinder: Kind, Franz-Georg, 95176 Konradsreuth (DE); Göschel, Rick, 08112 Wilkau-Hasslau (DE)

(57) **Zusammenfassung**

Die Erfindung betrifft ein Verfahren zum Herstellen einer Anordnung (18) aus miteinander verbundenen Materialstücken (10) aus einem flächig ausgebildeten, unidirektionalfaserverstärkten Material (12), wobei das Material (12) ein die Fasern (14) zumindest teilweise umgebendes thermoplastisches Kunststoffmaterial (16) umfasst, umfassend die Schritte: (A) Bereitstellen von wenigstens zwei Materialstücken (10) aus dem Material (12), (B) Aneinander anlegen der Materialstücke (10) zum Bilden einer Anordnung (18), (C) Bilden wenigstens einer Durchstoßöffnung (42) durch Durchstoßen der Anordnung (18) im Überlappungsbereich (20) mit wenigstens einer erwärmten Durchstoßnadel (36) zum aufschmelzen des Kunststoffmaterials, und (D) Einbringen von zwei Endabschnitten (44) eines zusammenhängenden Fadenabschnitts (46) von wenigstens einem Faden (27) in die Durchstoßöffnung (42) mittels einer Einbring-Nadel (38) zum Bilden einer Schlaufe (50), wobei die Endabschnitte (44) bei dem Einbringen wenigstens teilweise in das in Schritt (C) wenigstens bereichsweise aufgeschmolzene Kunststoffmaterial (16) eingebettet werden, und (E) Aushärten. Die Erfindung betrifft auch ein System zum Verbinden der Materialstücke.

## Beschreibung

### Hintergrund der Erfindung

Die vorliegende Erfindung betrifft ein Verfahren zum Herstellen einer Anordnung aus miteinander verbundenen Materialstücken aus einem flächig ausgebildeten, unidirektional-faserverstärkten Material, wobei das Material ein die Fasern zumindest teilweise umgebendes thermoplastisches Kunststoffmaterial umfasst. Die Erfindung betrifft auch ein System zum Verbinden der Materialstücke einer derartigen Anordnung.

Es ist bekannt aus einer Anordnung der eingangs genannten Art ein Formteil, wie z.B. ein Batteriegehäuse eines Kraftfahrzeuges zu formen. Hierfür wird die Anordnung, die insbesondere auch in Form eines Vorformlings ausgebildet sein kann, bis an oder über die Schmelztemperatur des thermoplastischen Kunststoffmaterials erwärmt und anschließend in ein die endgültige Form des Formteils formendes Formwerkzeug eingebracht, um aus der Anordnung bzw. dem Vorformling das Formteil bzw. die endgültige Kontur des Formteils zu Formen.

Um insbesondere eine einfache Handhabung der Anordnung zu ermöglichen - z.B. beim Transport der Anordnung von einer Wärmequelle zum Erwärmen des Kunststoffmaterials zu dem Formwerkzeug mittels eines Industrieroboters - ist es erforderlich die Materialstücke der Anordnung miteinander zu verbinden bzw. in ihrer Lage zueinander zu fixieren. Bei bekannten Verfahren zur Herstellung einer Anordnung aus miteinander verbundenen Materialstücken werden die flächig ausgebildeten Materialstücke zum Verbinden unter Einsatz aufwendig gestalteter Nähvorrichtungen miteinander vernäht.

### Zugrundeliegende Aufgabe

Es ist Aufgabe der Erfindung, ein alternatives Verfahren zum Herstellen einer Anordnung aus miteinander verbundenen Materialstücken aus einem flächig ausgebildeten, unidirektional-faserverstärkten Material anzugeben, mit welchem der Aufwand zum Verbinden der Materialstücke wesentlich reduziert werden kann und ein für die Ausführung des Verfahrens einsetzbares System zum Verbinden der Materialstücke der Anordnung anzugeben.

### Erfindungsgemäße Lösung

Diese Aufgabe wird erfindungsgemäß mit einem Verfahren mit den Merkmalen des Anspruchs 1 und mit einem System mit den Merkmalen des Anspruchs 10 gelöst.

Im Unterschied zu den bekannten Lösungen wird in Schritt C des erfindungsgemäßen Verfahrens wenigstens eine Durchstoßöffnung durch Durchstoßen der Anordnung in dem Überlappungsbereich mit wenigstens einer erwärmten Durchstoßnadel gebildet, die wenigstens bereichsweise erwärmt ist und das thermoplastische Kunststoffmaterial beim Durchstoßen wenigstens bereichsweise aufschmilzt bzw. das thermoplastische Kunststoffmaterial jedes Materialstücks des wenigstens einen Überlappungsbereichs beim Durchstoßen wenigstens bereichsweise aufschmilzt. Besonders bevorzugt wird in Schritt C eine Mehrzahl von voneinander beabstandeten Durchstoßöffnungen gebildet. Die durch diesen Schritt bereitgestellte Aufschmelzung des thermoplastischen Kunststoffmaterials ermöglicht in Schritt D eine auf einfache und praktische Weise durchführbare Verbindung der Materialstücke der Anordnung. Hierfür erfolgt in Schritt D das Einbringen von zwei Endabschnitten eines zusammenhängenden Fadenabschnitts wenigstens eines Fadens in die Durchstoßöffnung mittels wenigstens einer Einbring-Nadel, wobei ein zwischen den Endabschnitten befindlicher Bereich des Fadenabschnitts außerhalb oder innerhalb der Durchstoßöffnung eine Schlaufe bildet, wobei die Endabschnitte und/oder der Fadenabschnitt bei dem Einbringen wenigstens teilweise in das in Schritt wenigstens bereichsweise aufgeschmolzene Kunststoffmaterial eingebettet werden.

Das Einbringen der beiden Endabschnitte des zusammenhängenden Fadenabschnitts unter Ausbildung der Schlaufe kann hierbei besonders bevorzugt gemäß eines vom Tufting bekannten Tufting-Einbringverfahrens erfolgen. Bei einem typischen bekannten Tufting-Einbringverfahren wird - vorzugsweise bevor die Einbring-Nadel bzw. die Tufting-Nadel wieder zurück läuft bzw. aus dem Material bzw. der Durchstoßöffnung entfernt bzw. herausbewegt wird - der Faden bzw. das Fadenmaterial festgehalten, um die außerhalb oder innerhalb der Durchstoßöffnung angeordnete bzw. befindliche Schleife oder Schlaufe aus dem Faden bzw. Fadenmaterial zu bilden. Zum Festhalten können hierbei insbesondere Greifer verwendet werden.

Durch das Aushärten gemäß Schritt E, was insbesondere z.B. bei Raumtemperatur erfolgen kann, können die wenigstens teilweise oder zur Gänze eingebetteten Endabschnitte des zusammenhängenden Fadenabschnitts und/oder der eingebettete Fadenabschnitt in dem thermoplastischen Kunststoffmaterial jedes Materialstücks des wenigstens einen Überlappungsbereichs gehalten werden bzw. es können die wenigstens teilweise oder zur Gänze eingebetteten Endabschnitte des zusammenhängenden Fadenabschnitts und/oder der Fadenabschnitt mit dem Kunststoffmaterial jedes Materialstücks des wenigstens einen Überlappungsbereichs durch das Aushärten verbunden werden.

Im Unterschied zu den bekannten Lösungen kann also mittels eines einfach vorzunehmenden Einbringverfahrens, das insbesondere ein Tufting-Einbringverfahren sein kann, eine Verbindung der Materialstücke der Anordnung miteinander bzw. eine Lagefixierung der Materialstücke zueinander vorgenommen werden. Von dem bekannten aufwendigen Nähen - bei dem eine oder mehrere Fäden (z.B. Oberfaden und Unterfaden) miteinander oder zusammen mit dem Kunststoffmaterial technisch aufwendig verschlungen werden - kann durch Verwendung des erfindungsgemäßen Verfahrens vorteilhaft abgesehen werden.

Insgesamt gesehen kann durch den Einsatz bzw. die Verwendung des erfindungsgemäßen Verfahrens der Aufwand zum Verbinden der Materialstücke der Anordnung im Vergleich zu den bekannten Lösungen wesentlich reduziert werden. Eine entsprechende Anordnung kann im Folgenden in ein Kunststoff-Spritzgusswerkzeug überführt und durch eine Konsolidierung und/oder durch das Anspritzen von Funktionselementen (z.B. Befestigungspunkten, Dichtungen, Versteifungselementen, Rippen, Flanschen, Tragelemente) ein Formteil hergestellt werden. Beispiele für Formteile die aus der erfindungsgemäßen Anordnung herstellbar sind können ein Batteriegehäuse für eine Traktionsbatterie eines Elektrofahrzeugs, eine Reserveradmulde, ein Achsenteil, ein Längsträger, ein Querträger oder ein anderes Strukturteil eines Fahrzeuges sein.

Durch die Benennung der Schritte mit den Buchstaben A bis E wird keine ausschließliche Bindung an eine zeitliche Reihenfolge verfolgt. Insbesondere ist also nicht vorgesehen, die Schritte ausschließlich aufeinanderfolgend vorzunehmen. Die Buchstaben dienen lediglich der Benennung bzw. Kennzeichnung der Schritte, um insbesondere auch den Rückbezug und mithin auch die Beschreibung der Erfindung zu erleichtern. So kann Schritt B nach Schritt A vorgenommen werden aber auch zeitgleich bzw. im Wesentlichen zeitgleich mit Schritt B erfolgen. Schritt D kann nach insbesondere dann nach Schritt C erfolgen, wenn die Durchstoßnadel mit der Einbring-Nadel nicht identisch ist. Ist die Durchstoß-Nadel hingegen mit der Einbring-Nadel identisch, wie es bei der unten näher beschriebenen vorteilhaften Ausführungsform des erfindungsgemäßen Verfahrens der Fall ist, werden Verfahrensmerkmale der Schritte C und D zeitgleich bzw. im wesentlichen zeitgleich vorgenommen, wie unten näher dargelegt. Insbesondere das Aushärten gemäß Schritt E muss nicht nach den Schritten C und D erfolgen, sondern wird vorzugsweise unmittelbar nach dem Aufschmelzen des thermoplastischen Kunststoffmaterials gemäß Schritt C erfolgen, insbesondere wenn das Verfahren z.B. in einer Raumtemperatur-Umgebung vorgenommen wird.

Um eine insbesondere für eine Automatisierung hinreichend schnelle bzw. wirksame Aufschmelzung des thermoplastischen Kunststoffmaterials zu ermöglichen, weist die wenigstens bereichsweise oder zur Gänze erwärmte Durchstoßnadel eine Temperatur bzw. an dem erwärmten Bereich eine Temperatur auf, die größer ist als die Schmelztemperatur des thermoplastischen Kunststoffmaterial der Materialstücke, wobei die Temperatur der Durchstoßnadel bzw. die Temperatur der Durchstoßnadel an dem erwärmten Bereich derselben bevorzugt um wenigstens 30 Grad Celsius größer ist als die Schmelztemperatur. Vorzugsweise kann die wenigstens eine Durchstoßnadel vor Schritt (C) - zum Bereitstellen der wenigstens bereichsweise oder zur Gänze erwärmten Durchstoßnadel - durch Bestrahlen mit Wärmestrahlung und/oder durch Widerstandserwärmung und/oder durch induktives Erwärmen und/oder durch in Kontakt bringen mit einem Heizelement er-wärmt werden. Der erwärmte Bereich der Durchstoßnadel ist besonders bevorzugt ein Endabschnitt der Durchstoßnadel, der den verjüngenden Bereich der Durchstoßnadel bzw. die Spitze der Durchstoßnadel bzw. die Nadelspitze der Durchstoßnadel aufweist.

Bevorzugt kann auch die Einbring-Nadel vor Schritt D erwärmt werden bzw. in Schritt D in einem erwärmten Zustand bzw. wenigstens bereichsweise in einem erwärmten Zustand vorliegen. Auf Weise können vorteilhaft Abkühlungseffekte in der Zeit zwischen dem durchstoßen mit der Durchstoßnadel gemäß Schritt C um dem Einbringen der Einbring-Nadel gemäß Schritt D kompensiert bzw. ausgeglichen werden. Auf diese Weise kann eine hinreichende Verschmelzung gewährleistet werden, die für eine wirksame Verbindung der Materialstücke vorteilhaft ist. Alternativ kann die Einbring-Nadel jedoch auch in Schritt D in einem unerwärmten Zustand vorliegen. Diese Alternative wäre insbesondere dann von Vorteil, wenn die Abkühlungseffekte im jeweiligen Anwendungsfall vernachlässigbar sind. Hier wäre eine zusätzliche Erwärmung der Einbring-Nadel, die mit einem zusätzlichen Energieverbrauch verbunden ist, unnötig.

Der Faden besteht vorzugsweise aus einem Fadenmaterial in Form eines Garns. Der Faden kann aus Glasfasern oder Aramidfasern oder Kohlefasern oder Metallfasern bestehen. Der Faden kann insbesondere aus einem artgleichen oder verträglichen Kunststoffmaterial in Bezug auf das thermoplastische Kunststoffmaterial der Materialstücke bestehen. Der Faden kann bevorzugt aus dem gleichen Material bestehen wie die Verstärkungsfasern der Materialstücke.

Das gemäß Schritt C des erfindungsgemäßen Verfahrens vorgesehene Durchstoßen mit einer wenigstens bereichsweise erwärmten Durchstoßnadel macht es insbesondere möglich, dass jedes Materialstück der Anordnung vor dem Durchstoßen gemäß Schritt C Raumtemperatur aufweist. Ein Vorwärmen des thermoplastischen Kunststoffmaterials der Materialstücke ist nicht erforderlich.

Bei einer bevorzugten Ausführungsform des erfindungsgemäßen Verfahrens ist die Einbring-Nadel mit der erwärmten Durchstoßnadel identisch, und das Bilden der Durchstoßöffnungen gemäß Schritt C erfolgt durch das Einbringen der Endabschnitte gemäß Schritt D. Bei dieser praktischen Ausführungsform wird das Bilden der Durchstoßöffnungen und das Einbringen der Endabschnitte des zusammenhängenden Fadenabschnitts auf einfache und praktische Weise in einem Arbeitsschritt unter Verwendung der Einbring-Nadel vorgenommen. Die erwärmte bzw. erhitze Einbring-Nadel, die insbesondere in Form einer Tufting-Nadel ausgebildet sein kann, bildet sowohl die jeweilige Durchstoßöffnung durch Durchstoßen und bringt bei dem Durchstoßen die zwei Endabschnitte des zusammenhängenden Fadenabschnitts in die Durchstoßöffnung ein bzw. bringt während des Bildens der Durchstoßöffnung durch Durchstoßen die Endabschnitte ein.

Bei einer praktischen Ausführungsform des erfindungsgemäßen Verfahrens wird während der Schritte C und D wenigstens ein Teilbereich des Überlappungsbereichs in Umgebung der von der wenigstens einen Durchstoßnadel durchstoßenen Bereiche verpresst. Durch das vorgesehene Verpressen kann die Positionierung der über den wenigstens einen Faden miteinander zu verbindenden Materialstücke bei dem Einbringen bzw. Herausbewegen der Durchstoßnadel und/oder der Einbring-Nadel stabilisiert werden. Durch das Verpressen kann ferner vorteilhaft zwischen den Materialstücken befindliche Luft herausgedrängt werden bzw. entweichen, welche für einen anschließenden Formprozess in einem die endgültige Form des Formteils formenden Formwerkzeug von Nachteil sein könnte. Durch das Verpressen, bei dem das Material der Materialstücke auch wirksam verdichtet und stabilisiert wird, können ferner auch vorteilhaft Wellungen der Materialstücke vermieden bzw. beseitigt werden und damit auch mögliche Fehler im Weiterverarbeitungsprozess minimiert werden. Der Grad der Verpressung kann besonders bevorzugt mittels eines Drucksensors überwacht werden.

Bei einer weiteren praktischen Ausführungsform des erfindungsgemäßen Verfahrens werden während der Schritte C und D die sich überlappenden Materialstücke des Überlappungsbereichs wenigstens bereichsweise durch Erwärmen des thermoplastischen Kunststoffmaterials der Materialstücke zusätzlich stoffschlüssig miteinander verbunden werden, wobei das thermoplastische Kunststoffmaterial hierfür durch das Erwärmen wenigstens bereichsweise aufgeschmolzen wird. Die Ausbildung von stoffschlüssigen Verbindungen hat den Vorteil, dass zusätzlich zu der Verbindung über den wenigstens einen Faden weitere Verbindungen zwischen den Materialstücken geschaffen werden, durch welche die gesamte Verbindung bzw. Lagefixierung der Materialstücke wesentlich verstärkt werden kann, was insbesondere bei einer Anordnung mit wenigen dünnen Materialstücken für einen nachfolgenden Transport der Anordnung von Vorteil ist. Besonders bevorzugt können hierbei die Materialstücke zum stoffschlüssigen Verbinden durch Bestrahlen mit Ultraschallwellen erwärmt werden. Besonders bevorzugt wird diese weitere praktische Ausführungsform des erfindungsgemäßen Verfahrens in Kombination mit dem Verpressen gemäß der oben beschriebenen praktischen Ausführungsform vorgenommen, so dass also das Erwärmen der sich überlappenden Materialstücke während des Verpressens des Teilbereichs vorgenommen wird. Dies hat den Vorteil, dass die Erwärmung und damit auch die Ausbildung der zusätzlichen stoffschlüssigen Verbindungen bzw. das Verschweißen im verpressten Zustand der Materialstücke erfolgen kann, einhergehend mit der zusätzlichen Schaffung von sehr stabilen bzw. festen flächigen Verbindungen zwischen den Materialstücken.

Bei einer bevorzugten Ausführungsform des erfindungsgemäßen Verfahrens werden in Schritt C eine Mehrzahl von wenigstens zwei, vorzugsweise mindestens drei voneinander beabstandeten Durchstoßöffnungen durch gleichzeitiges Durchstoßen mit wenigstens zwei. vorzugsweise drei erwärmten Durchstoßnadeln gebildet, die relativ zueinander ortsfest angeordnet sind, und Schritt D wird nach dem Bilden der Durchstoßöffnungen vorgenommen. Auf diese Weise kann vorteilhaft sehr wirksam Prozesszeit eingespart werden, indem die Mehrzahl von wenigstens zwei, vorzugsweise mindestens drei voneinander beabstandeten Durchstoßöffnungen in einem einzigen Durchstoßungsvorgang gebildet werden, in welche anschließend der wenigstens eine Faden abschnittsweise gemäß Schritt D eingebracht wird. Die beliebige Mehrzahl von Durchstoßnadeln kann bevorzugt auf einem Nadelbett relativ zueinander ortsfest angeordnet sein. Alternativ kann anstelle des Vorsehens von Durchstoßöffnungen auch eine Mehrzahl von Öffnungen durch Bohren - z.B. unter Verwendung eines CNC gesteuerten Bohrkopfs - gebildet werden.

Bei einer weiteren bevorzugten Ausführungsform des erfindungsgemäßen Verfahrens wird in Schritt C die wenigstens eine Durchstoßnadel beim Durchstoßen innerhalb eines vorgegebenen Drehwinkelintervalls von maximal 210 Grad abwechselnd in einem vorgegebenen Drehsinn und in einem zu diesem entgegengesetzten Drehsinn um ihre Längsachse rotiert und/oder in Schritt C wird der Durchstoßungsbewegung der wenigstens einen Durchstoßnadel eine longitudinale Oszillationsbewegung mit einer Amplitude von wenigstens 0,5 mm aufgeprägt und/oder in Schritt C wird die wenigstens eine Durchstoßnadel beim Durchstoßen durch Einwirken von Ultraschall zum Schwingen angeregt.

Alle drei gemäß dieser weiteren bevorzugten Ausführungsform des erfindungsgemäßen Verfahrens zusätzlich zu der Durchstoßungsbewegung vorgesehenen zusätzlichen Bewegungsformen bzw. Bewegungsarten der Durchstoßnadel erleichtern das Einbringen der Durchstoßnadel in das thermoplastische Kunststoffmaterial zum Ausbilden der jeweiligen Durchstoßöffnung. Dies hat insbesondere den Vorteil, dass die Durchstoßnadel bzw. die Einbring-Nadel - sofern mit der Durchstoßnadel identisch - nur auf eine wesentlich geringere Temperatur erwärmt bzw. erhitzt werden muss, da die ohne die zusätzlichen Bewegungen erforderliche höhere Temperatur durch die zusätzlichen Bewegungen der Durchstoßnadel ausgeglichen werden können. Dies wiederum hat den Vorteil, dass - wenn die Einbring-Nadel mit der Durchstoßnadel identisch ist - der wenigstens eine Faden aus einem Fadenmaterial bestehen kann, welches ohne die zusätzlichen Bewegungen einer für das Fadenmaterial zu hohen Temperatur ausgesetzt wäre und insbesondere schmelzen könnte. Durch Vorsehen der zusätzlichen Bewegungsformen bzw. Bewegungsarten der Durchstoßnadel gemäß dieser weiteren bevorzugten Ausführungsform können daher vorteilhaft insbesondere vergleichsweise kostengünstige Fadenmaterialien aus thermoplastischem Material verwendet werden.

Bei den Materialstücken handelt es sich bevorzugt um Materialstücke aus einem flächig ausgebildeten, unidirektional-faserverstärkten Material, wobei das Material ein die Fasern zumindest teilweise umgebendes thermoplastisches Kunststoffmaterial umfasst. Bei den Verstärkungsfasern des unidirektional-faserverstärkten Materials handelt es sich vorzugsweise um Endlosfasern, die eine wirksame Verstärkung des jeweils aus der Anordnung zu formenden Formteils, wie z.B. einem Batteriegehäuse für eine Traktionsbatterie eines Elektrofahrzeugs, eine Reserveradmulde, ein Achsenteil, einen Längsträger, einen Querträger oder ein anderes Strukturteil eines Fahrzeuges bereitstellen. Da gemäß Schritt C des erfindungsgemäßen Verfahrens bei dem Bilden der Durchstoßöffnungen das thermoplastische Kunststoffmaterial insbesondere in Umgebung der Durchstoßöffnungen wenigstens bereichsweise aufschmilzt, können die Durchstoßöffnungen ohne Beschädigen oder Zerstören der Fasern gebildet werden, welche in-folge der Aufschmelzung des thermoplastischen Kunststoffmaterials vorteilhaft beim Durchstoßen seitlich weggedrückt werden können.

Bei den Materialstücken kann es sich erfindungsgemäß insbesondere um sogenannte vollkonsolidierte Materialstücke handeln. Bei einem sogenannten vollkonsolidierten Materialstück ist das thermoplastische Kunststoffmaterial, welches die Fasern bzw. Verstärkungsfasern wenigstens teilweise oder zur Gänze umgibt, komplett bzw. vollständig ausgehärtet, so dass dieses Material von einer unerwärmten Nadel nicht durchstoßbar ist. Durch das erfindungsgemäß vorgesehene Durchstoßen mit einer erwärmen Durchstoßnadel eignet sich das erfindungsgemäße Verfahren vorteilhaft insbesondere zum Herstellen einer Anordnung aus miteinander verbundenen vollkonsolidierten Materialstücken, die unidirektional faserverstärkt sind.

Bei den Verstärkungsfasern handelt es sich vorzugsweise um Mineralfasern, insbesondere Glasfasern, und/oder Carbonfasern, und/oder Aramidfasern und/oder polymere Fasern, und/oder synthetische Fasern und/oder Fasern von nachwachsenden Rohstoffen. Die erste Schicht und/oder die zweite Schicht kann hierbei mittels der Verstärkungsfasern insbesondere unidirektional-faserverstärkt sein, insbesondere um vorteilhaft eine Anpassung an im späteren Einsatz z.B. eines Batteriegehäuseteils angreifende Kräfte und daraus resultierende Lastpfade zu ermöglichen. Ferner kann es sich bei den Verstärkungsfasern um Kurzfasern und/oder Langfasern und/oder Endlosfasern handeln.

Das erfindungsgemäße System ist ein für die Ausführung des erfindungsgemäßen Verfahrens einsetzbares System zum Verbinden der Materialstücke der Anordnung. Das System umfasst wenigstens eine Durchstoßnadel, die in einer Durchstoßrichtung und in einer zu dieser entgegengesetzten Richtung bewegbar ist und zum Bilden von wenigstens einer Durchstoßöffnung durch Durchstoßen der Anordnung in wenigstens einem Überlappungsbereich vorgesehen ist, in welchem sich wenigstens zwei der Materialstücke überlappen, wobei die Durchstoßnadel wenigstens bereichsweise erwärmbar ist und das thermoplastische Kunststoffmaterial durch das Durchstoßen mit der wenigstens bereichsweise erwärmten Durchstoßnadel wenigstens bereichsweise aufschmelzbar ist. Das System umfasst ferner wenigstens eine Einbring-Nadel, wobei die Einbring-Nadel in die Durchstoßöffnung hinein und aus dieser heraus bewegbar ist, und wobei über die Einbring-Nadel von wenigstens einem Faden zwei Endabschnitte eines zusammenhängenden Fadenabschnitts in die Durchstoßöffnung unter Bildung einer außerhalb oder innerhalb der Durchstoßöffnung angeordneten Schlaufe einbringbar sind. Durch den Einsatz des erfindungsgemäßen Systems ist das erfindungsgemäße Verfahren mit den bereits oben beschriebenen Vorteilen ausführbar.

Bei einer bevorzugten Ausführungsform des Systems ist die Durchstoßnadel mit der Einbring-Nadel identisch. Wie bereits oben dargelegt, kann, wenn die Durchstoßnadel mit der Einbring-Nadel identisch ist, das Bilden der Durchstoßöffnungen und das Einbringen der zwei Endabschnitte des zusammenhängenden Fadenabschnitts auf einfache und praktische Weise in einem Arbeitsschritt vorgenommen werden.

Bei einer praktischen Ausführungsform des Systems weist das System eine Pressvorrichtung auf, die dazu eingerichtet ist, wenigstens einen Teilbereich des Überlappungsbereichs in Umgebung der von der wenigstens einen Durchstoßnadel durchstoßenen Bereiche zu verpressen. Bei einer weiteren praktischen Ausführungsform kann das System auch wenigstens eine Erwärmungsvorrichtung (wie z.B. ein Heizstrahler, eine Laserquelle oder eine Schweißvorrichtung) aufweisen, die dazu eingerichtet ist, überlappende Materialstücke des Überlappungsbereichs wenigstens bereichsweise durch Erwärmen des thermoplastischen Kunststoffmaterials der Materialstücke zusätzlich stoffschlüssig miteinander zu verbinden. Die Erwärmungsvorrichtung kann hierbei besonderes bevorzugt eine Ultraschallquelle umfassen. Die hiermit mögliche Verpressung und/oder Erwärmung ermöglicht die bereits oben beschriebene vorteilhafte wesentliche Verstärkung der Verbindung der Materialstücke miteinander. Um einem möglichen Anhaften der Materialstücke an der Pressvorrichtung vorzubeugen, kann die Pressvorrichtung bevorzugt mit wenigstens einer Antihaftbeschichtung versehen sein.

Bei einer weiteren bevorzugten Ausführungsform ist das System eingerichtet, die wenigstens eine Durchstoßnadel beim Durchstoßen innerhalb eines vorgegebenen Drehwinkelintervalls von maximal 210 Grad abwechselnd in einem vorgegebenen Drehsinn und in einem zu diesem entgegengesetzten Drehsinn um ihre Längsachse zu rotieren und/oder das System ist eingerichtet, der Durchstoßungsbewegung der wenigstens einen Durchstoßnadel eine longitudinale Oszillationsbewegung mit einer Amplitude von wenigstens 0,5 mm aufzuprägen und/oder das System weist wenigstens einen an die wenigstens eine Durchstoßnadel mechanisch gekoppelten Ultraschallerzeuger auf, der eingerichtet ist, die wenigstens eine Durchstoßnadel beim Durchstoßen durch Einwirken von Ultraschall zum Schwingen anzuregen.

Alle drei mit dieser weiteren bevorzugten Ausführungsform des erfindungsgemäßen Systems zusätzlich zu der Durchstoßungsbewegung möglichen Bewegungsformen bzw. Bewegungsarten der Durchstoßnadel erleichtern das Einbringen der Durchstoßnadel bzw. der Einbring-Nadel - sofern mit der Durchstoßnadel identisch - in das thermoplastische Kunststoffmaterial zum Ausbilden der jeweiligen Durchstoßöffnung, einhergehend mit den bereits oben beschriebenen Wirkungen und Vorteilen.

### Kurzbeschreibung der Zeichnungen

Nachfolgend werden Ausführungsbeispiele der Erfindung anhand der beigefügten Zeichnungen näher erläutert. Es zeigen:
- Fig. 1A - 1D: jeweils schematische dreidimensionale Darstellungen zur Veranschaulichung eines ersten Ausführungsbeispiels eines erfindungsgemäßen Verfahrens unter Verwendung eines ersten Ausführungsbeispiels eines erfindungsgemäßen Systems,
- Fig. 2A 2D: jeweils schematische dreidimensionale Darstellungen zur Veranschaulichung eines zweiten Ausführungsbeispiels eines erfindungsgemäßen Verfahrens unter Verwendung des ersten Ausführungsbeispiels des erfindungsgemäßen Systems,
- Fig. 3A - 3D: jeweils schematische dreidimensionale Darstellungen zur Veranschaulichung eines dritten Ausführungsbeispiels eines erfindungsgemäßen Verfahrens unter Verwendung eines zweiten Ausführungsbeispiels des erfindungsgemäßen Systems,
- Fig. 4A - 4C: jeweils schematische dreidimensionale Darstellungen zur Veranschaulichung eines vierten Ausführungsbeispiels eines erfindungsgemäßen Verfahrens unter Verwendung eines dritten Ausführungsbeispiels des erfindungsgemäßen Systems,
- Fig. 5: eine schematische dreidimensionale Darstellung zur Veranschaulichung eines fünften Ausführungsbeispiels eines erfindungsgemäßen Verfahrens, und
- Fig. 6: eine schematische dreidimensionale Darstellung zur Veranschaulichung eines sechsten Ausführungsbeispiels eines erfindungsgemäßen Verfahrens.

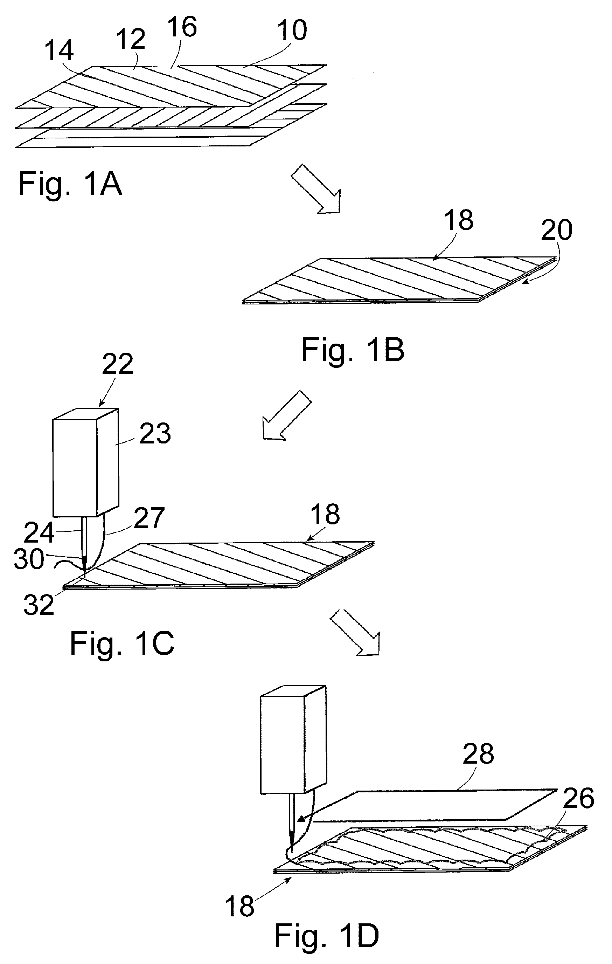

Die Fig. 1A - 1D dienen der Veranschaulichung eines ersten Ausführungsbeispiels eines erfindungsgemäßen Verfahrens umfassend die Schritte A bis E. Die Fig. 1A veranschaulicht Schritt A des Verfahrens, bei dem drei Materialstücke 10 aus dem flächig ausgebildeten, unidirektional-faserverstärkten Material 12 bereitgestellt werden, die zuvor z.B. durch Zuschneiden eines entsprechenden Halbzeugs gebildet wurden. Bei dem Material 12 aus dem die Materialstücke 10 bestehen handelt es um ein durch Endlosfasern 14 verstärktes thermoplastisches Kunststoffmaterial 16, wobei die Endlosfasern 14 in das Kunststoffmaterial 16 wenigstens teilweise eingebettet und vorzugsweise parallel bzw. im Wesentlichen parallel zueinander angeordnet sind.

Die Fig. 1B veranschaulicht die Situation nach der Durchführung des Schritts B des Verfahrens, bei dem die drei Materialstücke 10 aneinander angelegt werden zum Bilden einer vorgegebenen Anordnung 18 der Materialstücke 10 zueinander, wobei sich bei der Anordnung 18 die drei Materialstücke 10 in einem Überlappungsbereich 20 überlappen, der hier dadurch gekennzeichnet ist, dass sich alle drei Materialstücke 10 vollständig überlappen.

Die Fig. 1D dient der Veranschaulichung der Schritte C und D des erfindungsgemäßen Verfahrens, wobei aus dieser schematischen Darstellung nicht alle Einzelheiten dieser Schritte hervorgehen. Die Fig. 1C veranschaulicht hierbei lediglich die Situation vor dem Durchführen der Schritte C und D und zeigt das für die Durchführung dieses Verfahrens verwendete System 22 umfassend eine Einbring-Nadel 24, die über eine in einem Gehäuse 23 aufgenommene Aktorik (nicht näher dargestellt) in Längsrichtung hin- und her bewegbar ist, und zugleich auch als Durchstoßnadel 24 dient. Die Einbring-Nadel 24 bzw. die Aktorik ist zum Bilden einer linienförmigen Verbindung 26 (vgl. Fig. 1D) entlang eines vorgegebenen Verfahrwegs 28 über der Anordnung 18 verfahrbar, wobei die Verfahrbarkeit über einen Industrieroboter bereitgestellt werden kann, an welchem die Aktorik bzw. das Gehäuse 23 angebracht ist.

Zum Bilden der linienförmigen Verbindung 26 der Materialstücke 10 wird zum einen gemäß Schritt C eine Mehrzahl von voneinander beabstandeten Durchstoßöffnungen durch Durchstoßen der Anordnung mit der Einbring-Nadel 24 gebildet, wobei der Endabschnitt 30 der Einbring-Nadel 24 mit dem verjüngenden Bereich 32 bzw. der Spitze 32 auf eine Temperatur erwärmt wurde, die größer ist als die Schmelztemperatur des thermoplastischen Kunststoffmaterials der Materialstücke 10. Bei dem Durchstoßen wird das thermoplastische Kunststoffmaterial jedes der Materialstücke 10 bereichsweise aufgeschmolzen. In Schritt D werden zum Bilden der linienförmigen Verbindung 26 von einem Faden 27 jeweils zwei Endabschnitte eines zusammenhängenden Fadenabschnitts über die Einbring-Nadel in jede Durchstoßöffnung eingebracht (in Fig. 1 nicht näher veranschaulicht), wobei ein zwischen den Endabschnitten befindlicher Bereich des Fadenabschnitts außerhalb jeder Durchstoßöffnung eine Schlaufe bildet, so dass nach Schritt D eine der Mehrzahl der Durchstoßöffnungen entsprechende Mehrzahl von Schlaufen vorliegt. Die Endabschnitte werden bei dem Einbringen wenigstens teilweise in das in Schritt C wenigstens bereichsweise aufgeschmolzene Kunststoffmaterial eingebettet. In Schritt E erfolgt das Aushärten des in Schritt C bereichsweise aufgeschmolzenen Kunststoffmaterials, wobei durch das Aushärten die wenigstens teilweise eingebetteten Endabschnitte in dem Kunststoffmaterial gehalten werden bzw. mit diesem verbunden werden.

Alternativ oder in Kombination kann auch der Fadenabschnitt 46 bei dem Einbringen wenigstens teilweise in das wenigstens bereichsweise aufgeschmolzene Kunststoffmaterial 16 eingebettet werden. Beim Aushärten des bereichsweise aufgeschmolzenen Kunststoffmaterials 16, wird bzw. werden durch das Aushärten die wenigstens teilweise eingebetteten Endabschnitte 44 und/oder der Fadenabschnitt 46 in dem Kunststoffmaterial 16 gehalten. Der Fadenabschnitt 46 bildet dann innerhalb der Durchstoßöffnung 42 eine Schlaufe 50.

Bei dem in den Fig.1A-1D veranschaulichten Ausführungsbeispiel ist die Einbring-Nadel 24, die insbesondere in Form einer Tufting-Nadel 24 ausgebildet sein kann, mit der erwärmten Durchstoßnadel 24 identisch und das Bilden der Durchstoßöffnungen gemäß Schritt C erfolgt durch Einbringen der zwei Endabschnitte des jeweils zusammenhängenden Fadenabschnitts gemäß Schritt D. Bei diesem Ausführungsbeispiel werden also das Bilden der Durchstoßöffnungen und das Einbringen der Endabschnitte des jeweils zusammenhängenden Fadenabschnitts auf einfache und praktische Weise in einem Arbeitsschritt unter Verwendung der Einbring-Nadel vorgenommen. Die erwärmte bzw. erhitze Einbring-Nadel bildet sowohl die jeweilige Durchstoßöffnung durch Durchstoßen und bringt bei dem Durchstoßen die zwei Endabschnitte des zusammenhängenden Fadenabschnitts in die Durchstoßöffnung ein bzw. bringt während des Bildens der Durchstoßöffnung durch Durchstoßen diese Endabschnitte ein.

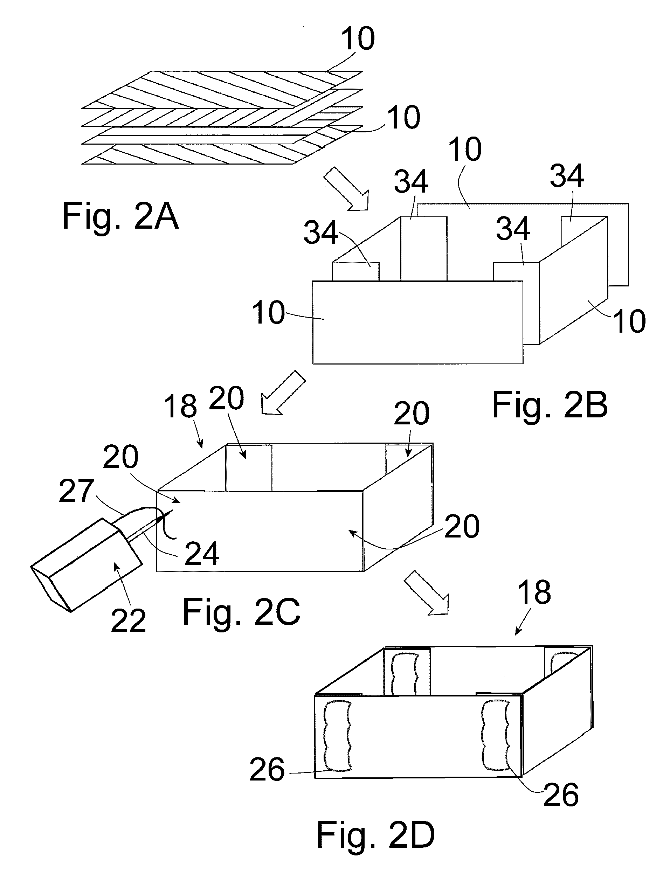

Die Fig. 2A - 2D dienen der Veranschaulichung eines zweiten Ausführungsbeispiels eines erfindungsgemäßen Verfahrens, welches sich von dem in den Fig. 1A bis 1D veranschaulichten Ausführungsbeispiel dadurch unterscheidet, dass vier Materialstücke 10 vorgesehen sind, von denen zwei zum bilden einer kastenförmigen Anordnung 18 mit jeweils zwei gegenüberliegenden umgebogenen Randabschnitten 34 versehen sind. Hier weist die Anordnung 18 nach der Durchführung der Schritte A und B vier Überlappungsbereiche 20 auf, die zum Bilden von vier geschlossenen linienförmigen Verbindungen 26 mit entsprechenden voneinander beabstandeten Durchstoßöffnungen versehen werden durch Durchstoßen mit der Einbring-Nadel 24.

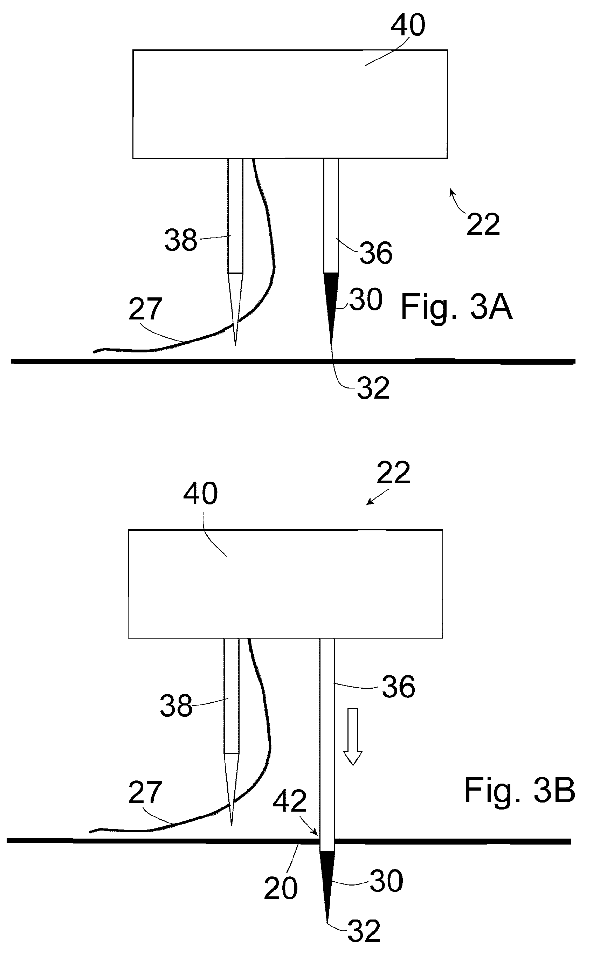

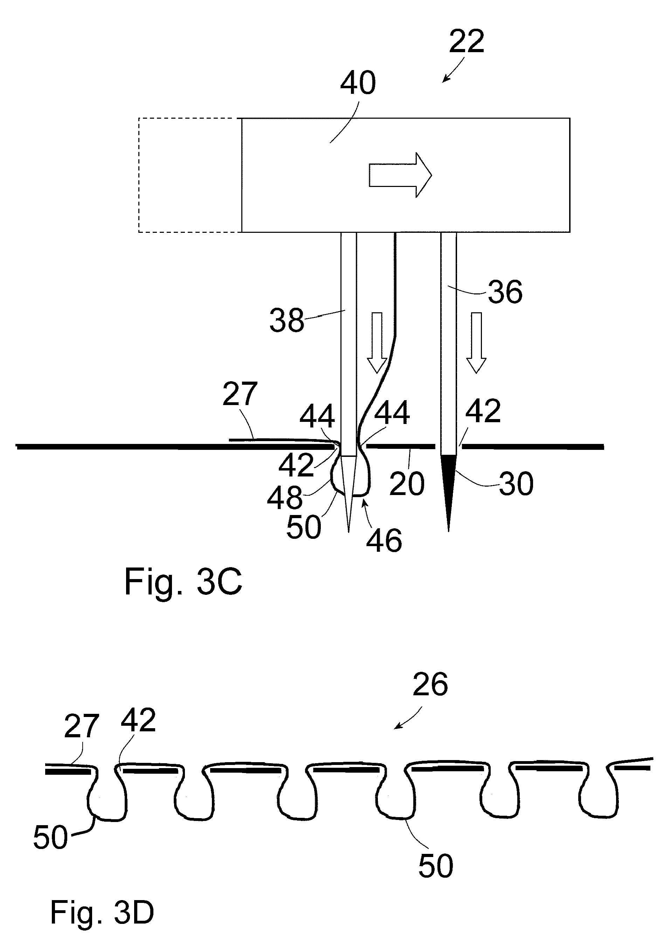

Die Fig. 3A - 3D dienen der Veranschaulichung eines dritten Ausführungsbeispiels eines erfindungsgemäßen Verfahrens unter Verwendung eines zweiten Ausführungsbeispiels des erfindungsgemäßen Systems 22. Das bei dem hier zu veranschaulichenden Ausführungsbeispiel verwendete System 22 weist eine Durchstoßnadel 36 und eine hiervon beabstandete Einbring-Nadel 38 auf. Die Durchstoßnadel 36 und die Einbring-Nadel 38 sind in ihrer Längsrichtung über eine nicht dargestellte Aktorik hin- und her bewegbar, die in einer bewegbaren Einheit 40 (vgl. auch Pfeil in Fig. 3C) aufgenommen sind.

Bei dem hier zu veranschaulichenden Ausführungsbeispiel bildet die Durchstoß-Nadel 36 - deren die Nadelspitze 32 aufweisender Endabschnitt 30 erwärmt ist bzw. erwärmt wurde - eine Durchstoßöffnung 42 in einem Überlappungsbereich 20 (hier nur schematisch dargestellt) (vgl. Fig. 3B) gemäß Schritt C des erfindungsgemäßen Verfahrens. Anschließend wird die Durchstoß-Nadel 36 aus der Durchstoßöffnung 42 herausbewegt und dann wird die Einbring-Nadel 38 von der bewegbaren Einheit 40 über der Durchstoßöffnung 42 angeordnet, um Schritt D des erfindungsgemäßen Verfahrens durchzuführen (vgl. Fig. 3C), bei dem zwei Endabschnitte 44 eines zusammenhängenden Fadenabschnitts 46 eines Fadens 27 durch die Einbring-Nadel 38 in die Durchstoßöffnung 42 eingebracht werden (die Durchstoßöffnung 42 ist hier in Fig. 3C zur Veranschaulichung sehr vergrößert dargestellt), wobei ein zwischen den Endabschnitten 44 befindlicher Bereich 48 des Fadenabschnitts 46 außerhalb der Durchstoßöffnung 42 eine Schlaufe 50 bzw. Schleife 50 bildet. Bei dem Einbringen werden die Endabschnitte 44 wenigstens teilweise in das in Schritt C wenigstens bereichsweise aufgeschmolzene Kunststoffmaterial der Materialstücke 10 eingebettet. Nach oder während des Einbringens der Endabschnitte 44 wird von der Durchstoßnadel 36 eine weitere Durchstoßöffnung (nicht dargestellt) gebildet, in welche wiederum zwei Endabschnitte eines anderen zusammenhängenden Fadenabschnitts des Fadens durch die Einbring-Nadel 38 eingebracht werden. Auf diese Weise kann sukzessive eine linienförmige Verbindung 26 geschaffen werden, die eine Mehrzahl von Durchstoßöffnungen 42 aufweist, wie in Fig. 3D schematisch gezeigt, wobei die linienförmige Verbindung 26 mittels eines einzigen Fadens 27 unter Ausbildung einer Mehrzahl von Schlaufen 50 hergestellt wurde, von denen jede jeweils außerhalb einer der Durchstoßöffnungen 42 angeordnet ist, und wobei die Mehrzahl der Schlaufen 50 der Mehrzahl der Durchstoßöffnungen 42 entspricht.

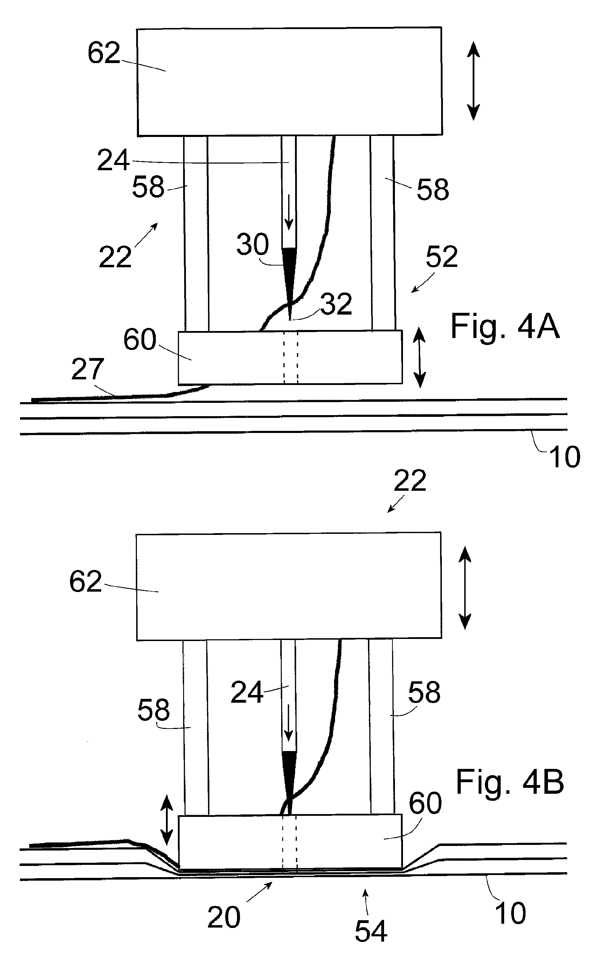

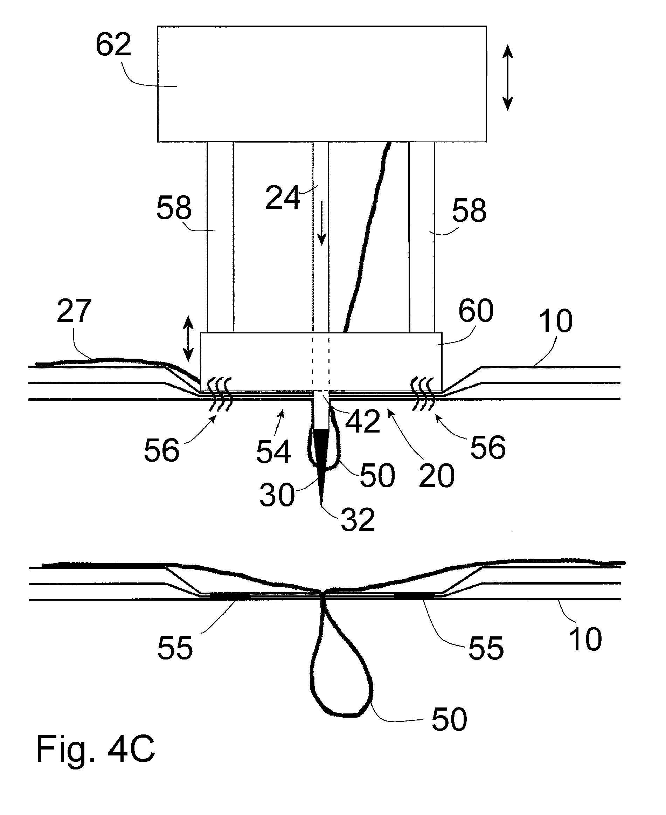

Die Fig. 4A - 4C dienen der Veranschaulichung eines vierten Ausführungsbeispiels eines erfindungsgemäßen Verfahrens unter Verwendung eines dritten Ausführungsbeispiels des erfindungsgemäßen Systems 22. Das bei dem hier zu veranschaulichenden Ausführungsbeispiel verwendete System 22 umfasst eine Durchstoßnadel 24, die in einer Durchstoßrichtung und in einer zu dieser entgegengesetzten Richtung bewegbar ist und zum Bilden von wenigstens einer Durchstoßöffnung durch Durchstoßen der Anordnung 18 in wenigstens einem Überlappungsbereich 20 vorgesehen ist, in welchem sich wenigstens zwei der Materialstücke 10 überlappen. Der die Spitze 32 der Durchstoßnadel 24 aufweisende Endabschnitt 30 ist erwärmbar und das thermoplastische Kunststoffmaterial jedes Materialstücks 10 der Anordnung 18 ist durch Durchstoßen mit der erwärmten Durchstoßnadel 24 bereichsweise aufschmelzbar. Über die mit der Einbring-Nadel 24 identische Durchstoßnadel 24 sind von einem Faden 27 zwei Endabschnitte eines zusammenhängenden Fadenabschnitts (hier nicht näher veranschaulicht) in die Durchstoßöffnung 42 unter Bildung einer außerhalb der Durchstoßöffnung 42 angeordneten Schlaufe 50 einbringbar (vgl. Fig. 4C). Die Fig. 4A bis 4D veranschaulichen hierbei die entsprechenden Schritte C und D des erfindungsgemäßen Verfahrens (vgl. auch schematische Pfeile an der Durchstoßnadel 24) beispielhaft für eine Durchstoßöffnung 42 und eine Schlaufe 50 bei Verwendung eines einzigen Fadens 27 und einer einzigen mit der Einbring-Nadel 24 identischen Durchstoßnadel 24.

Das in den Fig. 4A bis 4C dargestellte System 22 weist ferner eine Pressvorrichtung 52 (vgl. Fig. 4A) auf, die dazu eingerichtet ist, einen Teilbereich 54 (vgl. Fig. 4B) des Überlappungsbereichs 20 in Umgebung der von der Durchstoßnadel 24 durchstoßenen Bereiche zu verpressen. Ferner weist das System 22 zwei Erwärmungsvorrichtungen 56 jeweils in Form einer Ultraschallquelle 56 (in Fig. 4C nur sehr schematisch dargestellt) auf, die dazu eingerichtet sind, überlappende Materialstücke 10 des Überlappungsbereichs 20 bereichsweise durch Erwärmen des thermoplastischen Materials der Materialstücke 10 stoffschlüssig miteinander zu verbinden. Die Pressvorrichtung 52 umfasst zwei parallel zueinander angeordnete Führungselemente 58 und ein Presselement 60, dass parallel zur Durchstoßrichtung der Durchstoßnadel 24 an den Führungselementen 58 beweglich geführt ist (vgl. auch entsprechenden Doppelpfeil). Zum Verpressen kann das Presselement 60 in Durchstoßrichtung an den Überlappungsbereich 20 gepresst werden. Die Durchstoßnadel 24 selbst ist an einem Verschiebungselement 62 befestigt, welches ebenfalls parallel zur Durchstoßrichtung der Durchstoßnadel 24 an den Führungselementen 58 beweglich geführt ist (vgl. auch entsprechenden Doppelpfeil). Der Faden 27 wird mittels nicht näher dargestellter Führungen unterhalb des Presselements 60 geführt.

Dieses System 22 ermöglicht gemäß dem hier beschriebenen vierten Ausführungsbeispiel des erfindungsgemäßen Verfahrens, dass während der Schritte C und D ein Teilbereich 54 des Überlappungsbereichs 20 in Umgebung der von der Durchstoßnadel 24 durchstoßenen Bereiche (wie in Fig. 4B und C gezeigt) durch die Pressvorrichtung 52 verpresst wird und das während des Verpressens bzw. im verpressten Zustand die sich überlappenden Materialstücke 10 des Überlappungsbereichs 20 wenigstens bereichsweise durch Erwärmen des thermoplastischen Materials der Materialstücke 10 stoffschlüssig miteinander verbunden werden, und zwar durch Bestrahlen mit Ultraschall. In Fig. 4C unten sind die entsprechenden hierdurch gebildeten flächigen bzw. großflächigen stoffschlüssigen Verbindungen 55 schematisch dargestellt.

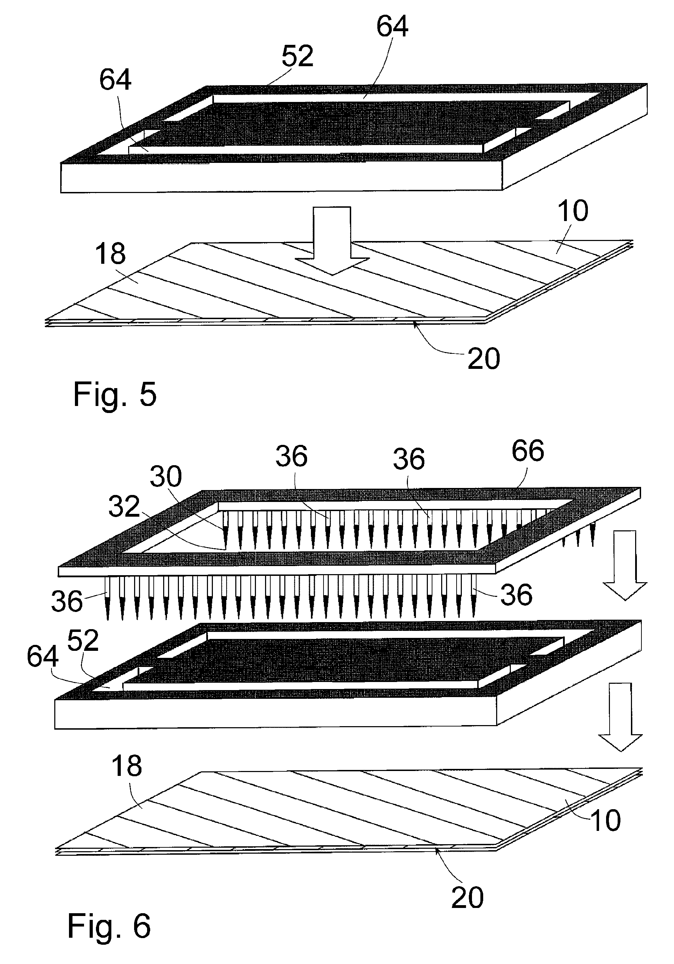

Die Fig. 5 zeigt eine schematische dreidimensionale Darstellung zur Veranschaulichung eines fünften Ausführungsbeispiels eines erfindungsgemäßen Verfahrens bei dem ein Teilbereich des Überlappungsbereichs 20 bzw. der Anordnung 18 durch eine Pressvorrichtung 52 in Form einer Platte 52 durch das Eigengewicht der Platte 52 verpresst wird, wobei die Platte 52 zwei Aussparungen 64 (alternativ kann auch nur eine umlaufende Aussparung oder mehr als zwei Aussparungen vorgesehen sein) nach Art eines Verbindungskanals 64 aufweist, über welche ein oder mehrere Durchstoßnadeln - zum Bilden der Durchstoßöffnungen in den von den Aussparungen 64 freigehaltenen Bereichen - die Anordnung 18 aus den Materialstücken 10 durchstoßen können, und zwar wenn die Platte 52 auf der Anordnung 18 aufliegt bzw. diese verpresst. Die Verbindung der Materialstücke 10 der Anordnung 18 erfolgt hier unter anderem durch entlang fahren einer einzigen Durchstoßnadel bzw. einer einzigen Einbringnadel in den Verbindungskanälen 64 (in Fig. 5 nicht dargestellt).

Die Platte 52 kann besonders bevorzugt auch zweiteilig oder mehrteilig ausgeführt sein. Eine zweiteilige oder mehrteilige Ausführung hat den Vorteil, dass der Faden ggf. an möglichen Verbindungsstellen nicht neu bereitgestellt werden muss. Auch bei diesem Ausführungsbeispiel kann vorgesehen sein, eine zusätzliche stoffschlüssige Verbindung durch Bestrahlen mit Ultraschall vorzusehen.

Die Fig. 6 zeigt eine schematische dreidimensionale Darstellung zur Veranschaulichung eines sechsten Ausführungsbeispiels eines erfindungsgemäßen Verfahrens. Zur Verpressung wird hier eine mit der Platte 52 der Fig. 5 identische Platte 52 verwendet, um eine Verpressung durch das Eigengewicht der Platte 52 zu ermöglichen. Im Unterschied zu der in der Fig. 5 dargestellten Situation, wo eine Verbindung der Materialstücke 10 unter anderem durch entlang fahren einer einzigen Durchstoßnadel bzw. einer einzigen Einbringnadel in den Verbindungskanälen 64 bzw. Aussparungen 64 erfolgt, wird hier eine Mehrzahl von voneinander beabstandeten Durchstoßöffnungen durch gleichzeitiges Durchstoßen mit einer dieser Mehrzahl entsprechenden Durchstoßnadeln 36 gebildet, deren die Spitze 32 bzw. Nadelspitze 32 aufweisende Endabschnitte 30 erwärmt sind. Die Durchstoßnadeln 36 sind relativ zueinander ortsfest an einem Nadelbett 66 angeordnet bzw. befestigt. Bei dem in der Fig. 6 veranschaulichten Ausführungsbeispiel wird Schritt D erst nach dem Bilden der Durchstoßöffnungen mittels des Nadelbetts 66 vorgenommen.

### Bezugszeichenliste

- 10: Materialstück
- 12: unidirektional-faserverstärktes Material
- 14: Endlosfaser
- 16: thermoplastisches Kunststoffmaterial
- 18: Anordnung
- 20: Überlappungsbereich
- 22: System
- 23: Gehäuse
- 24: Einbring-Nadel, Durchstoßnadel
- 26: linienförmige Verbindung
- 27: Faden
- 28: Verfahrweg
- 30: Endabschnitt
- 32: verjüngender Bereich, Spitze
- 34: Randabschnitt
- 36: Durchstoßnadel
- 38: Einbring-Nadel
- 40: Einheit
- 42: Durchstoßöffnung
- 44: Endabschnitt
- 46: Fadenabschnitt
- 48: Fadenabschnitt-Bereich
- 50: Schlaufe
- 52: Pressvorrichtung
- 54: Teilbereich
- 56: Erwärmungsvorrichtung
- 58: Führungselement
- 60: Presselement
- 62: Verschiebungselement
- 64: Aussparung
- 66: Nadelbett

## Patentansprüche

1. Verfahren zum Herstellen einer Anordnung (18) aus miteinander verbundenen Materialstücken (10) aus einem flächig ausgebildeten, unidirektional-faserverstärkten Material (12), wobei das Material (12) ein die Fasern (14) zumindest teilweise umgebendes thermoplastisches Kunststoffmaterial (16) umfasst, und wobei das Verfahren die folgenden Schritte umfasst:
(A) Bereitstellen von wenigstens zwei Materialstücken (10) aus dem flächig ausgebildeten, unidirektional-faserverstärkten Material (12),
(B) Aneinander anlegen der Materialstücke (10) zum Bilden einer vorgegebenen Anordnung (18) der Materialstücke (10) zueinander, wobei sich bei der Anordnung (18) wenigstens zwei Materialstücke (10) in wenigstens einem Überlappungsbereich (20) überlappen,
(C) Bilden wenigstens einer Durchstoßöffnung (42) durch Durchstoßen der Anordnung (18) in dem Überlappungsbereich (20) mit wenigstens einer erwärmten Durchstoßnadel (36), die wenigstens bereichsweise erwärmt ist und das thermoplastische Kunststoffmaterial (16) beim Durchstoßen wenigstens bereichsweise aufschmilzt, und
(D) Einbringen von zwei Endabschnitten (44) eines zusammenhängenden Fadenabschnitts (46) wenigstens eines Fadens (27) in die Durchstoßöffnung (42) mittels wenigstens einer Einbring-Nadel (38), wobei ein zwischen den Endabschnitten (44) befindlicher Bereich (48) des Fadenabschnitts (46) außerhalb oder innerhalb der Durchstoßöffnung (42) eine Schlaufe (50) bildet, wobei die Endabschnitte (44) und/oder der Fadenabschnitt (46) bei dem Einbringen wenigstens teilweise in das in Schritt (C) wenigstens bereichsweise aufgeschmolzene Kunststoffmaterial (16) eingebettet werden, und
(E) Aushärten des in Schritt (C) bereichsweise aufgeschmolzenen Kunststoffmaterials (16), wobei durch das Aushärten die wenigstens teilweise eingebetteten Endabschnitte (44) und/oder der Fadenabschnitt (46) in dem Kunststoffmaterial (16) gehalten werden.

2. Verfahren nach Anspruch 1, **dadurch gekennzeichnet, dass** die Einbring-Nadel (24) mit der erwärmten Durchstoßnadel (24) identisch ist, und dass das Bilden der Durchstoßöffnungen (42) gemäß Schritt (C) durch das Einbringen der Endabschnitte (44) gemäß Schritt (D) erfolgt.

3. Verfahren nach Anspruch 1 oder 2, **dadurch gekennzeichnet, dass** während der Schritte (C) und (D) wenigstens ein Teilbereich (54) des Überlappungsbereichs (20) in Umgebung der von der wenigstens einen Durchstoßnadel (24, 36) durchstoßenen Bereiche verpresst wird.

4. Verfahren nach einem der vorangehenden Ansprüche, **dadurch gekennzeichnet, dass** während der Schritte (C) und (D) die sich überlappenden Materialstücke (10) des Überlappungsbereichs (20) wenigstens bereichsweise durch Erwärmen des thermoplastischen Kunststoffmaterials (16) der Materialstücke (10) zusätzlich stoffschlüssig miteinander verbunden werden.

5. Verfahren nach Anspruch 4, **dadurch gekennzeichnet, dass** die Materialstücke (10) zum stoffschlüssigen Verbinden durch Bestrahlen mit Ultraschallwellen erwärmt werden.

6. Verfahren nach einem der vorangehenden Ansprüche **dadurch gekennzeichnet, dass** in Schritt (C) eine Mehrzahl von wenigstens zwei, vorzugsweise mindestens drei voneinander beabstandeten Durchstoßöffnungen (42) durch gleichzeitiges Durchstoßen mit wenigstens zwei, vorzugsweise mindestens drei erwärmten Durchstoßnadeln (36) gebildet wird, die relativ zueinander ortsfest angeordnet sind, und dass Schritt (D) nach dem Bilden der Durchstoßöffnungen (42) vorgenommen wird.

7. Verfahren nach einem der vorangehenden Ansprüche, **dadurch gekennzeichnet, dass** die wenigstens eine Durchstoßnadel (24, 36) vor Schritt (C) durch Bestrahlen mit Wärmestrahlung und/oder durch Widerstandserwärmung und/oder durch induktives Erwärmen und/oder durch in Kontakt bringen mit einem Heizelement erwärmt wird.

8. Verfahren nach einem der vorangehenden Ansprüche, **dadurch gekennzeichnet, dass** in Schritt (C) die wenigstens eine Durchstoßnadel (24, 36) beim Durchstoßen innerhalb eines vorgegebenen Drehwinkelintervalls von maximal 210 Grad abwechselnd in einem vorgegebenen Drehsinn und in einem zu diesem entgegengesetzten Drehsinn um ihre Längsachse rotiert wird und/oder dass in Schritt (C) der Durchstoßungsbewegung der wenigstens einen Durchstoßnadel (24, 36) eine longitudinale Oszillationsbewegung mit einer Amplitude von wenigstens 0,5 mm aufgeprägt wird und/oder dass in Schritt (C) die wenigstens eine Durchstoßnadel (24, 36) beim Durchstoßen durch Einwirken von Ultraschall zum Schwingen angeregt wird.

9. Verfahren nach einem der vorangehenden Ansprüche, **dadurch gekennzeichnet, dass** jedes Materialstück (10) der Anordnung (18) vor dem Durchstoßen gemäß Schritt (C) Raumtemperatur aufweist.

10. System (22) zum Verbinden der Materialstücke (10) einer Anordnung (18) umfassend wenigstens zwei aneinandergelegte Materialstücke (10) aus einem flächig ausgebildeten, unidirektional-faserverstärkten Material (12), wobei das Material (12) ein die Fasern (14) zumindest teilweise umgebendes thermoplastisches Kunststoffmaterial (16) umfasst, mit
wenigstens einer Durchstoßnadel (36), die in einer Durchstoßrichtung und in einer zu dieser entgegengesetzten Richtung bewegbar ist und zum Bilden von wenigstens einer Durchstoßöffnung (42) durch Durchstoßen der Anordnung (18) in wenigstens einem Überlappungsbereich (20) vorgesehen ist, in welchem sich wenigstens zwei der Materialstücke (10) überlappen,
wobei die Durchstoßnadel (36) wenigstens bereichsweise erwärmbar ist und das thermoplastische Kunststoffmaterial (16) durch das Durchstoßen mit der wenigstens bereichsweise erwärmten Durchstoßnadel (36) wenigstens bereichsweise aufschmelzbar ist,
wenigstens einer Einbring-Nadel (38), wobei die Einbring-Nadel (38) in die Durchstoßöffnung (42) hinein und aus dieser heraus bewegbar ist, und wobei über die Einbring-Nadel (38) von wenigstens einem Faden (27) zwei Endabschnitte (44) eines zusammenhängenden Fadenabschnitts (46) in die Durchstoßöffnung (42) unter Bildung einer außerhalb oder innerhalb der Durchstoßöffnung (42) angeordneten Schlaufe (50) einbringbar sind.

11. System (22) nach Anspruch 10, **dadurch gekennzeichnet, dass** die Durchstoßnadel (24) mit der Einbring-Nadel (24) identisch ist.

12. System (22) nach Anspruch 10 oder 11, **dadurch gekennzeichnet, dass** das System (22) eine Pressvorrichtung (52) aufweist, die dazu eingerichtet ist, wenigstens einen Teilbereich (54) des Überlappungsbereichs (20) in Umgebung der von der wenigstens einen Durchstoßnadel (24, 36) durchstoßenen Bereiche zu verpressen.

13. System (22) nach einem der Ansprüche 10 bis 12, **dadurch gekennzeichnet, dass** das System (22) wenigstens eine Erwärmungsvorrichtung (56) aufweist, die dazu eingerichtet ist, überlappende Materialstücke (10) des Überlappungsbereichs (20) wenigstens bereichsweise durch Erwärmen des thermoplastischen Kunststoffmaterials (16) der Materialstücke (10) zusätzlich stoffschlüssig miteinander zu verbinden.

14. System (22) nach Anspruch 13, **dadurch gekennzeichnet, dass** die Erwärmungsvorrichtung (56) eine Ultraschallquelle (56) umfasst.

15. System (22) nach einem der Ansprüche 10 bis 14, **dadurch gekennzeichnet, dass** das System (22) eingerichtet ist, die wenigstens eine Durchstoßnadel (24, 36) beim Durchstoßen innerhalb eines vorgegebenen Drehwinkelintervalls von maximal 210 Grad abwechselnd in einem vorgegebenen Drehsinn und in einem zu diesem entgegengesetzten Drehsinn um ihre Längsachse zu rotieren und/oder dass das System (22) eingerichtet ist, der Durchstoßungsbewegung der wenigstens einen Durchstoßnadel (24, 36) eine longitudinale Oszillationsbewegung mit einer Amplitude von wenigstens 0,5 mm aufzuprägen und/oder dass das System (22) wenigstens einen an die wenigstens eine Durchstoßnadel (24, 26) mechanisch gekoppelten Ultraschallerzeuger aufweist, der eingerichtet ist, die wenigstens eine Durchstoßnadel (24, 26) beim Durchstoßen durch Einwirken von Ultraschall zum Schwingen anzuregen.
